# EUROPÄISCHE PATENTSCHRIFT

(11) **EP 3 643 897 B1**
(45) Veröffentlichungstag und Bekanntmachung des Hinweises auf die Patenterteilung: **19.08.2026**
(21) Anmeldenummer: 19204457.6
(22) Anmeldetag: 22.10.2019
(51) Int. Cl.: F01N 5/02, F02D 19/02, F02D 41/00, F02D 41/02

(54) **VERFAHREN ZUM BETREIBEN EINES VERBRENNUNGSMOTORS SOWIE VERBRENNUNGSMOTOR**
INTERNAL COMBUSTION ENGINE AND METHOD FOR OPERATING SAID ENGINE
MOTEUR À COMBUSTION INTERNE AND PROCÉDÉ D'OPÉRATION DUDIT MOTEUR

(30) Priorität: 25.10.2018 DE 102018126618
(43) Veröffentlichungstag der Anmeldung: 29.04.2020
(73) Patentinhaber: Volkswagen AG, 38440 Wolfsburg (DE)
(72) Erfinder: Baron von Ceumern-Lindenstjerna, Falk-Christian, 38124 Braunschweig (DE); Paukner, Stefan, 38442 Wolfsburg (DE); Horn, André, 38104 Braunschweig (DE); Kaack, Michael, 38531 Rötgesbüttel (DE); Maischik, Thomas, 38173 Sickte (DE); Carstensen, Asmus, 38557 Osloß (DE)
(74) Vertreter: Gulde & Partner

(56) Entgegenhaltungen:
- EP-A1- 3 208 450
- WO-A1-2009/138158
- WO-A1-2010/112958
- DE-A1- 102007 033 611
- DE-A1- 102016 104 564

## Beschreibung

Die Erfindung betrifft ein Verfahren zum Betreiben eines Verbrennungsmotors sowie einen Verbrennungsmotor mit einem Abgasnachbehandlungssystem zur Durchführung eines solchen Verfahrens gemäß dem Oberbegriff der unabhängigen Patentansprüche.

Aus der DE 43 10 145 A1 ist ein Verfahren zum Betreiben eines Verbrennungsmotors bekannt, bei welchem eine erste Gruppe von Brennräumen mit einem unterstöchiometrischen Verbrennungsluftverhältnis und eine zweite Gruppe von Brennräumen mit einem überstöchiometrischen Verbrennungsluftverhältnis betrieben werden, wobei die unverbrannten Kraftstoffkomponenten mit dem Restsauerstoff auf der katalytisch wirksamen Oberfläche des Drei-Wege-Katalysators umgesetzt werden, um den Drei-Wege-Katalysator bei Leerlauf oder bei Niedriglast auf einer Temperatur zu halten, bei der eine effiziente Konvertierung von Schadstoffen durch den Drei-Wege-Katalysator möglich ist.

Aus der US 2011 / 0265 762 A1 ist ein Verfahren zum Betreiben eines Verbrennungsmotors bekannt, bei dem ein erster Zylinder mit einem unterstöchiometrischen Verbrennungsluftverhältnis und ein zweiter Zylinder gleichzeitig mit einem überstöchiometrischen Verbrennungsluftverhältnis betrieben wird, sodass sich ein im Wesentlichen stöchiometrisches Abgas einstellt.

Die EP 3 208 450 A1 offenbart ein Verfahren zum Betreiben eines mit Erdgas befeuerten Dreizylinder-Verbrennungsmotors, bei dem die Abgastemperatur zur Verbesserung der Methankonvertierung angehoben wird, indem unverbrannte Kohlenwasserstoffe mit Restsauerstoff auf der katalytisch wirksamen Oberfläche eines Drei-Wege-Katalysators exotherm umgesetzt werden.

Aus der WO 2009/138 158 A1 ist ein Verbrennungsmotor mit einer Abgasanlage bekannt, in welcher ein thermoelektrischer Generator angeordnet ist. Dabei wird die Heißseite des thermoelektrischen Generators vom Abgasstrom des Verbrennungsmotors aufgeheizt. Dazu ist zwischen der Heißseite des thermoelektrischen Generators und der Abgasanlage ein Wärmetauscher vorgesehen, welcher mittels des Abgasstroms des Verbrennungsmotors Wärme auf den thermoelektrischen Generator überträgt.

Die WO 2010/112 958 A1 offenbart einen Verbrennungsmotor mit einer Abgasanlage, wobei in der Abgasanlage ein Partikelfilter und ein Abwärmerückgewinnungssystem angeordnet sind, mit welchem die zur Regeneration des Partikelfilters notwendige Wärme zumindest teilweise zurückgewonnen wird.

Aus der DE 10 2007 033 611 A1 ist ein Abgaswärmerückgewinnungssystem für einen Verbrennungsmotor bekannt. Das Abgaswärmerückgewinnungssystem umfasst einen Dampferzeuger, welcher die im Abgas des Verbrennungsmotors enthaltene Wärme zur weiteren Nutzung auf ein Arbeitsmedium überträgt. Dabei sind ein Wärmespeicher und Steuermittel zur Steuerung von Abgasteilströmen vorgesehen, um eine möglichst effiziente Dampferzeugung zu bewirken.

Der Erfindung liegt nun die Aufgabe zugrunde, bei einem mit einem Gaskraftstoff betriebenen Verbrennungsmotor die Katalysatoren in einem Temperaturbereich zu betreiben, bei dem eine effiziente Konvertierung der Schadstoffe sichergestellt ist und gleichzeitig die Effizienz des Verbrennungsmotors verbessert wird.

Die Aufgabe wird durch ein Verfahren zum Betreiben eines Verbrennungsmotors mit mindestens zwei Brennräumen, dessen Auslass mit einer Abgasanlage verbunden ist, gelöst, wobei die Abgasanlage einen Abgaskanal umfasst, in welchem in Strömungsrichtung eines Abgases des Verbrennungsmotors durch den Abgaskanal mindestens ein Drei-Wege-Katalysator und stromabwärts des mindestens einen Drei-Wege-Katalysators eine Abgaswärmerückgewinnungseinrichtung angeordnet ist. Es ist vorgesehen, dass ein erster Brennraum oder eine erste Gruppe von Brennräumen des Verbrennungsmotors mit einem unterstöchiometrischen Verbrennungsluftverhältnis (λ < 1) und ein zweiter Brennraum oder eine zweite Gruppe von Brennräumen mit einem überstöchiometrischen Verbrennungsluftverhältnis (λ > 1) betrieben werden, wobei die unverbrannten Kraftstoffkomponenten aus dem ersten Brennraum oder der ersten Gruppe von Brennräumen des Verbrennungsmotors mit dem Restsauerstoff aus dem zweiten Brennraum oder der zweiten Gruppe von Brennräumen auf dem Drei-Wege-Katalysator exotherm umgesetzt werden, wobei die Abgastemperatur T_{EG} angehoben wird, um aus dem Abgas eine Teilmenge der Abgasenthalpie stromabwärts des Drei-Wege-Katalysators durch die Abgaswärmerückgewinnungseinrichtung zurückzugewinnen. Durch ein erfindungsgemäßes Verfahren ist es möglich, die Komponenten der Abgasnachbehandlung, insbesondere einen Drei-Wege-Katalysator, in jedem Betriebszustand des Verbrennungsmotors auf einer Temperatur zu halten, welche eine wirksame und effiziente Konvertierung von unverbrannten Kraftstoff- und Abgaskomponenten ermöglicht. Gleichzeitig kann ein Teil der zum Heizen benötigten Energie über die Abgaswärmerückgewinnungseinrichtung zurückgewonnen werden. Das Abwärmerückgewinnungssystem wandelt die Wärme in mechanische oder elektrische Arbeit und stellt diese dem Antrieb oder dem Bordnetz des Fahrzeuges zur Verfügung und reduziert somit Gesamtkraftstoffverbrauch des Verbrennungsmotors. Ferner kann das erfindungsgemäße Verfahren eingesetzt werden, wenn in der Abgasanlage ein Partikelfilter verbaut ist, um die Regeneration des Partikelfilters zu ermöglichen. Dazu werden hohe Abgastemperaturen von 600°C und mehr benötigt, um den Ruß im Partikelfilter zu oxidieren. Gerade bei so hohen Abgastemperaturen wird viel Energie über den Abgasstrom an die Umwelt emittiert. Daher ist es gerade auch bei einer Regeneration des Partikelfilters nützlich, den Abgasstrom des Verbrennungsmotors durch die Abgaswärmerückgewinnungseinrichtung zu leiten und somit zumindest einen Teil dieser ansonsten ungenutzt in die Umwelt emittierten Energie zurückzugewinnen.

Durch die in den abhängigen Ansprüchen aufgeführten Merkmale sind vorteilhafte Verbesserungen und Weiterentwicklungen des im unabhängigen Anspruch genannten Verfahrens möglich.

Erfindungsgemäß ist vorgesehen, dass eine Abgastemperatur T_{EG} ermittelt wird, wobei das Verfahren eingeleitet wird, wenn die Abgastemperatur T_{EG} unterhalb einer Schwellentemperatur Ts liegt. Liegt die Abgastemperatur unterhalb dieser Schwellentemperatur, ist nur eine unvollständige Konvertierung der Schadstoffe des Verbrennungsmotors möglich. Daher sollte die Abgastemperatur gerade in diesem Betriebszustand, insbesondere bei einem Leerlauf oder Schwachlastbetrieb des Verbrennungsmotors angehoben werden, um ein Auskühlen des Drei-Wege-Katalysators zu vermeiden. Dadurch kann sichergestellt werden, dass stets eine effiziente Konvertierung der Schadstoffe im Abgas des Verbrennungsmotors möglich ist.

Erfindungsgemäß ist ferner vorgesehen, dass der Verbrennungsmotor als Gasmotor ausgeführt ist und mit einem Gaskraftstoff betrieben wird. Insbesondere bei mit brennbarem Gas betriebenen Verbrennungsmotoren sind hohe Katalysatortemperaturen notwendig, um eine entsprechend hohe Konvertierungsleistung für unverbranntes Methan im Abgas des Verbrennungsmotors zu erreichen. Diese Herausforderung steigt mit gealterten Katalysatoren und verschärft sich somit über die Lebensdauer des Gasmotors. Da bei einem Gasmotor höhere Abgastemperaturen notwendig sind als bei der Konvertierung des Abgases von Diesel oder Benzin betriebenen Motoren, um eine vollständige Konvertierung von schädlichen Abgaskomponenten zu erreichen, ist hier die Nutzung einer Abgaswärmerückgewinnungseinrichtung besonders nützlich.

Erfindungsgemäß ist dabei vorgesehen, dass der Verbrennungsmotor mit verdichtetem Erdgas (CNG), verflüssigtem Erdgas (LNG) oder Biogas betrieben wird. Erdgas und Biogas gewinnen als Energieträger zunehmend an Bedeutung und verbrennen im Allgemeinen "sauberer" als Benzin- oder Dieselkraftstoffe. Daher gewinnen solche Kraftstoffe, insbesondere in Hinblick auf Nutzfahrzeuge, Bootsmotoren oder Baumaschinen zunehmend an Bedeutung. Um bei einem Betrieb des Verbrennungsmotors mit diesen Kraftstoffen eine entsprechende Abgasnachbehandlung mit den genannten Vorteilen durchzuführen, ist das vorgeschlagene Verfahren besonders vorteilhaft.

Erfindungsgemäß ist vorgesehen, dass die Abgaswärmerückgewinnungseinrichtung nach einem Clausius-Rankine-Prozess arbeitet. Dabei umfasst die Abgaswärmerückgewinnungseinrichtung einen Wärmetauscher mit einem nachgeschalteten System zur Energiewandlung, bei dem über einen Dampfkreislauf die Abwärme des Verbrennungsmotors in elektrische oder mechanische Energie gewandelt wird.

In einer vorteilhaften Ausführungsvariante des Verfahrens ist vorgesehen, dass die über die Abgasrückgewinnungseinrichtung zurückgewonnene Energie in mechanische Energie konvertiert wird. Dabei kann die mechanische Energie beispielsweise zum Antrieb von Nebenaggregaten des Verbrennungsmotors oder anderer Verbraucher genutzt werden, wodurch sich eine Wirkungsgradverbesserung erzielen lässt.

Alternativ ist mit Vorteil vorgesehen, dass die über die Abgasrückgewinnungseinrichtung zurückgewonnene Energie in elektrische Energie konvertiert wird. Die elektrische Energie kann auf vergleichsweise einfache Art und Weise in einer Batterie zwischengespeichert werden, sodass diese auch zu Betriebszeitpunkten genutzt werden kann, wenn aktuell keine weitere Energie durch die Abgaswärmerückgewinnungseinrichtung erzeugt wird. Des Weiteren wird die serienmäßige Lichtmaschine entlastet, was wiederum zu einer Effizienzsteigerung des Verbrennungsmotors führt. Bei einer entsprechend vorteilhaft ausgeführten Energierückgewinnung kann die vom Verbrennungsmotor betriebene Lichtmaschine in Gänze entfallen, wenn der Bordnetzbedarf durch die aus dem Abgas zurückgewonnene Energie gedeckt wird.

Erfindungsgemäß ist vorgesehen, dass der erste Brennraum oder eine Gruppe von ersten Brennräumen mit einem unterstöchiometrischen Verbrennungsluftverhältnis (λ < 1) und ein zweiter Brennraum oder eine zweite Gruppe von Brennräumen mit einem überstöchiometrischen Verbrennungsluftverhältnis (λ > 1) betrieben werden, wobei sich stromabwärts des Auslasses des Verbrennungsmotors ein stöchiometrisches Abgas einstellt. Durch ein stöchiometrisches Abgas kann eine besonders effiziente Abgasreinigung erzielt werden. Dies gilt insbesondere, wenn dem ersten Drei-Wege-Katalysator ein zweiter Drei-Wege-Katalysator nachgeschaltet ist, welcher dann mit einem im Wesentlichen homogenen stöchiometrischen Abgas angeströmt wird, nachdem die unverbrannten Kraftstoffkomponenten mit dem Restsauerstoff auf der katalytisch wirksamen Oberfläche des ersten Drei-Wege-Katalysators exotherm umgesetzt worden.

Erfindungsgemäß wird ein Verbrennungsmotor mit mindestens einem ersten Brennraum und mindestens einem zweiten Brennraum vorgeschlagen, wobei ein Auslass des Verbrennungsmotors mit einer Abgasanlage verbunden ist, wobei die Abgasanlage einen Abgaskanal aufweist, in welchem in Strömungsrichtung eines Abgases des Verbrennungsmotors durch den Abgaskanal mindestens ein Drei-Wege-Katalysator und stromabwärts des Drei-Wege-Katalysators eine Abgaswärmerückgewinnungseinrichtung angeordnet sind, sowie mit einem Motorsteuergerät, welches dazu eingerichtet ist, ein erfindungsgemäßes Verfahren auszuführen, wenn ein maschinenlesbarer Programmcode durch das Motorsteuergerät ausgeführt wird. Durch einen solchen Verbrennungsmotor ist eine einfache Umsetzung eines erfindungsgemäßen Verfahrens möglich, wodurch der Wirkungsgrad des Verbrennungsmotors gesteigert und gleichzeitig die Effizienz der Abgasnachbehandlung durch eine erhöhte Konvertierungsleistung verbessert werden kann.

In einer bevorzugten Ausführungsform des Verbrennungsmotors ist vorgesehen, dass stromabwärts des Drei-Wege-Katalysator und stromaufwärts der Abgaswärmerückgewinnungseinrichtung ein Partikelfilter angeordnet ist. Auch wenn der Kraftstoff bei Gasmotoren in den Brennräumen prinzipiell sauberer als bei Benzin- oder Dieselmotoren verbrennt und somit primär deutlich weniger Rußpartikel bei der Verbrennung entstehen, so können durch einen Partikelfilter diese Partikelemissionen weiter gesenkt werden. Dieses gilt insbesondere, wenn der Verbrennungsmotor wahlweise mit Gas oder mit Benzin betrieben werden kann und auch im Benzinbetrieb eine entsprechende Abgasnachbehandlung ermöglicht werden soll. Erfindungsgemäß ist vorgesehen, dass ein Bypass zur Überbrückung der Abgaswärmerückgewinnungseinrichtung vorgesehen ist, mit welchem das Abgas des Verbrennungsmotors an der Abgaswärmerückgewinnungseinrichtung vorbeigeleitet werden kann. Durch den Bypass kann das Abgas an der Abgaswärmerückgewinnungseinrichtung vorbeigeleitet werden. Der Bypass der Abgaswärmerückgewinnungseinrichtung ist vorgesehen, wenn der Motorbetriebspunkt beispielsweise im Volllastbetrieb die maximale Leistungsaufnahme der Abgaswärmerückgewinnungseinrichtung dauerhaft überschreitet. Dadurch kann der Strömungswiderstand und damit verbunden der Abgasgegendruck in der Abgasanlage reduziert werden und somit die Effizienz des Verbrennungsmotors verbessert werden. Über den Bypass kann der Leistungseintrag in die Abgaswärmerückgewinnungseinrichtung geregelt werden, im Falle dass vom Bordnetz beziehungsweise der Batterie des Fahrzeuges keine weitere Energie mehr aufgenommen werden kann oder aber kein weiterer Wärmeeintrag in das Kühlsystem des Fahrzeuges über den Kondensator des AWN-Systems mehr zulässig ist.

In einer weiteren Verbesserung des Verbrennungsmotors ist vorgesehen, dass in dem Bypass eine Abgasklappe angeordnet ist. Durch eine Abgasklappe im Bypass kann der Bypass auf einfache Art und Weise verschlossen werden. Dadurch wird sichergestellt, dass bis auf eine kleine Leckagemenge der gesamte Abgasstrom durch die Abgaswärmerückgewinnungseinrichtung strömt. Zudem ist durch eine Abgasklappe eine einfache Möglichkeit zum Umschalten zwischen einem Bypassbetrieb und einem Abgaswärme-Rückgewinnungsbetrieb möglich.

In einer vorteilhaften Ausführungsform des Verbrennungsmotors ist vorgesehen, dass stromabwärts des Drei-Wege-Katalysators und stromaufwärts der Abgaswärmerückgewinnungseinrichtung ein zweiter Drei-Wege-Katalysator angeordnet ist. Dabei wird der erste Drei-Wege-Katalysator mit einem heterogenen Abgas angeströmt, welches sowohl unverbrannte Kraftstoffkomponenten als auch Restsauerstoff enthält. Durch den nachgeschalteten zweiten Drei-Wege-Katalysator, welcher dann mit einem im Wesentlichen homogenen stöchiometrischen Abgas angeströmt wird, nachdem die unverbrannten Kraftstoffkomponenten mit dem Restsauerstoff auf der katalytisch wirksamen Oberfläche des ersten Drei-Wege-Katalysators exotherm umgesetzt wurden, wird eine deutlich verbesserte Konvertierungsleistung bezüglich der limitierten Schadstoffe im Abgas des Verbrennungsmotors erreicht.

Besonders bevorzugt ist dabei, wenn der Bypass stromabwärts des zweiten Drei-Wege-Katalysators an einer Verzweigung aus dem Abgaskanal abzweigt und stromabwärts der Abgaswärmerückgewinnungseinrichtung an einer Einmündung wieder in den Abgaskanal mündet. Dadurch wird sichergestellt, dass stets alle Komponenten zur Abgasnachbehandlung des Verbrennungsmotors von dem Abgasstrom durchströmt werden, und die Abgaswärmerückgewinnungseinheit entsprechend einfach über den Bypass ab- und zugeschaltet werden kann.

In einer weiteren Ausführungsform der Erfindung ist vorgesehen, dass die Anströmung des ersten Drei-Wege-Katalysators mit dem heterogenen Abgas über einen zusätzlichen Abgasmischer homogenisiert wird. Die Homogenisierung des Abgases bereits stromauf des ersten Drei-Wege-Katalysators verbessert weiter das Konvertierungsverhalten der Gesamtabgasanlage.

In einer weiteren bevorzugten Ausführungsform des Verbrennungsmotors ist vorgesehen, dass der Verbrennungsmotor als ein mittels eines Abgasturboladers aufgeladener und mit einem Gas betriebener Verbrennungsmotor ist. Da die Abgasnachbehandlung von Gasmotoren gegenüber anderen Verbrennungsmotoren eine entsprechend hohe Temperatur erfordert, ist es gerade bei solchen Gasmotoren vorteilhaft, eine entsprechende Abgaswärmerückgewinnungseinrichtung in der Abgasanlage zu integrieren.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit den gleichen Bezugsziffern gekennzeichnet. Es zeigen:
- Figur 1: ein erstes Ausführungsbeispiel für einen erfindungsgemäßen Verbrennungsmotor mit einem Abgasnachbehandlungssystem;
- Figur 2: ein bevorzugtes Ausführungsbeispiel für einen erfindungsgemäßen Verbrennungsmotor mit einem Abgasnachbehandlungssystem;
- Figur 3: ein weiteres Ausführungsbeispiel für ein Abgasnachbehandlungssystem eines erfindungsgemäßen Verbrennungsmotors mit einem zusätzlichen Partikelfilter;
- Figur 4: eine weitere Alternative eines Abgasnachbehandlungssystems eines erfindungsgemäßen Verbrennungsmotors mit zwei Drei-Wege-Katalysatoren und einem Partikelfilter;
- Figur 5: eine weitere bevorzugte Ausführungsvariante für ein Abgasnachbehandlungssystem eines erfindungsgemäßen Verbrennungsmotors mit zwei Drei-Wege-Katalysatoren und einem nachgeschalteten Partikelfilter;
- Figur 6: ein weiteres Ausführungsbeispiel für ein Abgasnachbehandlungssystem eines erfindungsgemäßen Verbrennungsmotors lediglich einem Drei-Wege-Katalysator und einer nachgeschalteten Abgaswärmerückgewinnungssystem mit einem Bypass für die Abgaswärmerückgewinnungseinrichtung; und
- Figur 7: ein Ablaufschema für ein erfindungsgemäßes Verfahren zum Betreiben eines Verbrennungsmotors mit einem Abgasnachbehandlungssystem.

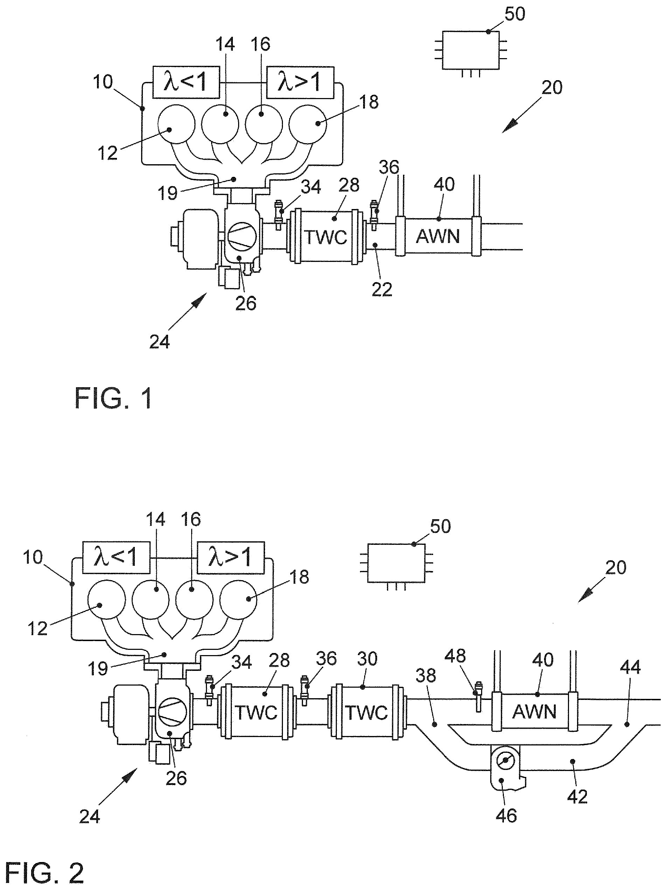

Figur 1 zeigt einen Verbrennungsmotor 10 mit einer Mehrzahl von Brennräumen 12, 14, 16, 18. In Figur 1 ist beispielhaft ein Verbrennungsmotor 10 mit vier Brennräumen 12, 14, 16, 18 dargestellt. Prinzipiell sind Verbrennungsmotoren 10 mit zwei oder mehr Brennräumen 12, 14, 16, 18 möglich. Der Verbrennungsmotor 10 ist vorzugsweise als Gasmotor ausgeführt und wird mit einem gasförmigen Brennstoff, insbesondere verdichtetem Erdgas (CNG), verflüssigtem Gas (LNG) oder Biogas betrieben. Der Verbrennungsmotor 10 ist mit seinem Auslass 19 mit einer Abgasanlage 20 verbunden, welche einen Abgaskanal 22 umfasst. In Strömungsrichtung eines Abgases des Verbrennungsmotors 10 durch den Abgaskanal 22 ist als erste Komponente der Abgasnachbehandlung ein Drei-Wege-Katalysator 28 angeordnet. Stromabwärts des Drei-Wege-Katalysators 28 ist eine Abgaswärmerückgewinnungseinrichtung 40 angeordnet. Der Verbrennungsmotor 10 ist vorzugsweise als ein mittels mindestens einem Abgasturbolader 24 aufgeladener Verbrennungsmotor 10 ausgeführt. Dazu ist stromabwärts des Auslasses 19 des Verbrennungsmotors 10 und stromaufwärts des Drei-Wege-Katalysators 28 eine Turbine 26 des Abgasturboladers 24 angeordnet, welche einen Verdichter in einem Ansaugtrakt des Verbrennungsmotors 10 antreibt, um die den Brennräumen 12, 14, 16, 18 zugeführte Frischluftmenge zu erhöhen. Stromaufwärts des Drei-Wege-Katalysators 28 ist eine erste Lambdasonde 34, vorzugsweise eine Breitbandsonde, angeordnet. Stromabwärts des ersten Drei-Wege-Katalysators 28 und stromaufwärts der Abgaswärmerückgewinnungseinrichtung 40 ist eine zweite Lambdasonde 36 vorgesehen. Die Lambdasonden 34, 36 sind in bekannter Weise über nicht dargestellte Signalleitungen mit einem Motorsteuergerät 50 des Verbrennungsmotors 50 verbunden, über welche das Verbrennungsluftverhältnis λ des Verbrennungsmotors 50 vorzugsweise Brennraum-individuell geregelt werden kann.

Bei der Verbrennung von Gas in Verbrennungsmotoren wird eine hohe Katalysatortemperatur des Drei-Wege-Katalysators 28 benötigt, um eine effiziente Konvertierung von unverbranntem Methan durch den Drei-Wege-Katalysator 28 zu ermöglichen. Bei gealterten Drei-Wege-Katalysatoren 28 verschärft sich dieses Problem. Ein Abgasturbolader 24 trägt zwar prinzipiell zu einer Erhöhung des Wirkungsgrades des Verbrennungsmotors 10 bei, entzieht dem Abgasstrom über die Turbine 26 aber ebenfalls Enthalpie, welche zum Antrieb des Verdichters des Abgasturboladers 24 genutzt wird. Somit verstärkt die Aufladung des Verbrennungsmotors 10 bei einem mit Gas betriebenen Verbrennungsmotor 10 zusätzlich die Herausforderung bezüglich einer hinreichenden Konvertierungsleistung des Drei-Wege-Katalysators 28. Um die Abgastemperatur T_{EG} anzuheben, wird eine erste Gruppe von Brennräumen 12, 14 des Verbrennungsmotors 10 mit einem unterstöchiometrischen Verbrennungsluftverhältnis λ < 1 und eine zweite Gruppe von Brennräumen 16, 18 mit einem überstöchiometrischen Verbrennungsluftverhältnis λ > 1 betrieben, sodass sich stromabwärts des Auslasses des Verbrennungsmotors 10 ein im Wesentlichen stöchiometrisches Abgas einstellt. Die unverbrannten Kraftstoffkomponenten aus den mit unterstöchiometrischem Verbrennungsluftverhältnis λ < 1 betriebenen Brennräumen12, 14, insbesondere unverbrannte Kohlenwasserstoffe HC, speziell Methan, Wasserstoff und/oder Kohlenmonoxid CO werden an der katalytisch wirksamen Oberfläche des Drei-Wege-Katalysators 28 mit dem Restsauerstoff aus den mit überstöchiometrischem Verbrennungsluftverhältnis λ > 1 betriebenen Brennräumen 16, 18 exotherm umgesetzt, wodurch sich der Drei-Wege-Katalysator 28 und der Abgasstrom stromabwärts des Drei-Wege-Katalysators 28 aufheizt. Um diese Wärme nicht ungenutzt in die Umwelt zu emittieren, ist stromabwärts des Drei-Wege-Katalysators 28 eine Abgaswärmerückgewinnungseinrichtung 40 vorgesehen, mit welcher eine Teilmenge der Abgasenthalpie in mechanische oder elektrische Energie zurückgewonnen wird. Die Abgaswärmerückgewinnungseinrichtung 40 kann insbesondere einen Abgaswärmetauscher mit einem nachgeschalteten System zur Energiewandlung umfassen, wobei das Trägermedium für das System zur Energiewandlung durch den Abgasstrom des Verbrennungsmotors 10 aufgeheizt und einem Dampfkreislauf zur Verfügung gestellt wird. Alternativ sind auch andere Möglichkeiten der Abgaswärmerückgewinnung möglich, wie zum Beispiel Thermoelektrische Generatoren (TEG).

Um eine hohe Temperatur für den Drei-Wege-Katalysator 28 sicherzustellen, sind eine Heizfunktion und eine Warmhaltefunktion für den Drei-Wege-Katalysator 28 durch das erfindungsgemäße Verfahren möglich. Ein Vorteil des Lambda-Split-Verfahrens, also einer Betriebsart des Verbrennungsmotors 10, bei der eine erste Gruppe von Brennräumen 12, 14 **mit einem** unterstöchiometrischen Verbrennungsluftverhältnis und eine zweite Gruppe von Brennräumen 16, 18 mit einem überstöchiometrischen Verbrennungsluftverhältnis betrieben werden, liegt darin, dass der Mehrverbrauch durch die Heizmaßnahme durch eine Wirkungsgradverbesserung in dem mit überstöchiometrischem Verbrennungsluftverhältnis λ > 1 betriebenen Brennräumen 16, 18 teilweise kompensiert wird. Wird dieses Verfahren in erfindungsgemäßer Weise mit einer stromabwärts des Drei-Wege-Katalysators 28 angeordneten Abgaswärmerückgewinnungseinrichtung 40 kombiniert, kann die Restwärme des Abgases genutzt werden, sodass sich der Wirkungsgrad steigern lässt und der Verbrauch weiter reduziert werden kann. Zudem kann die Abgaswärmerückgewinnungseinrichtung 40 bei Fahrprofilen mit hohen Lastzuständen des Verbrennungsmotors 10 auch ohne motorische Heizmaßnahmen genutzt werden, um einen Teil der Abwärme des Abgases zu nutzen und somit den Wirkungsgrad des Gesamtsystems weiter zu verbessern. Solche Fahrprofile treten insbesondere bei der Verwendung eines erfindungsgemäßen Verbrennungsmotors 10 zum Antrieb eines Nutzfahrzeuges auf, wenn der Verbrennungsmotor des Fahrzeuges aufgrund der Beladung oder des Streckenprofils mit entsprechender Leistung betrieben wird.

In Figur 2 ist ein bevorzugtes Ausführungsbeispiel eines erfindungsgemäßen Verbrennungsmotors 10 dargestellt. Der Verbrennungsmotor 10 weist eine Mehrzahl von Brennräumen 12, 14, 16, 18 auf, insbesondere vier oder mehr Brennräume 12, 14, 16, 18. Der Verbrennungsmotor 10 ist mit seinem Auslass 19 mit einer Abgasanlage 20 verbunden. Die Abgasanlage 20 umfasst einen Abgaskanal 22, in dem in Strömungsrichtung eines Abgases des Verbrennungsmotors 10 stromabwärts des Auslasses ein erster Drei-Wege-Katalysator 28, stromabwärts des ersten Drei-Wege-Katalysators 28 ein zweiter Drei-Wege-Katalysator 30 und weiter stromabwärts eine Abgaswärmerückgewinnungseinrichtung 40 angeordnet sind. Stromabwärts des zweiten Drei-Wege-Katalysators 30 zweigt an einer Verzweigung 38 ein Bypass 42 aus dem Abgaskanal 22 ab, welcher stromabwärts der Abgaswärmerückgewinnungseinrichtung 40 an einer Einmündung 44 wieder in den Abgaskanal 22 einmündet. In dem Bypass 42 ist eine Abgasklappe 46 angeordnet, mit welcher der Bypass 42 verschlossen werden kann, sodass der Bypass 42 als schaltbarer Bypass 42 ausgeführt ist und der Abgasstrom wahlweise durch die im Abgaskanal 22 angeordnete Abgaswärmerückgewinnungseinrichtung 40 oder durch den Bypass 42 geleitet werden kann. Ferner kann im Abgaskanal 22 ein Temperatursensor 48 angeordnet sein, um eine Abgastemperatur oder die Temperatur einer der Abgasnachbehandlungskomponenten 28, 30 oder der Abgaswärmerückgewinnungseinrichtung 40 zu ermitteln.

Der Verbrennungsmotor 10 ist vorzugsweise als ein mittels mindestens einem Abgasturbolader 24 aufgeladener Verbrennungsmotor 10 ausgeführt. Dazu ist stromabwärts des Auslasses 19 des Verbrennungsmotors 10 und stromaufwärts des Drei-Wege-Katalysators 28 eine Turbine 26 des Abgasturboladers 24 angeordnet, welcher einen Verdichter in einem Ansaugtrakt des Verbrennungsmotors 10 antreibt, um die den Brennräumen 12, 14, 16, 18 zugeführte Frischluftmenge zu erhöhen. Stromabwärts der Turbine 26 und stromaufwärts des Drei-Wege-Katalysators 28 ist eine erste Lambdasonde 34, vorzugsweise eine Breitbandsonde, angeordnet. Stromabwärts des ersten Drei-Wege-Katalysators 28 und stromaufwärts des zweiten Drei-Wege-Katalysators 30 ist eine zweite Lambdasonde 36 vorgesehen, welche ebenfalls als Breitbandsonde oder alternativ als Sprungsonde ausgeführt sein kann.

Der erste Drei-Wege-Katalysator 28 ist vorzugsweise in einer motornahen Position im Abgaskanal 22 angeordnet. Unter einer motornahen Position ist in diesem Zusammenhang eine Position mit einer Abgaslauflänge von weniger als 80 cm, insbesondere von weniger als 50 cm ab dem Auslass 19 des Verbrennungsmotors 10 zu verstehen. Der zweite Drei-Wege-Katalysator 30 ist vorzugsweise in einer motorfernen Position angeordnet. Dabei ist unter einer motorfernen Position eine Position in der Abgasanlage 20 mit einer Abgaslauflänge von mehr als 150 cm ab dem Auslass des Verbrennungsmotors 10 zu verstehen.

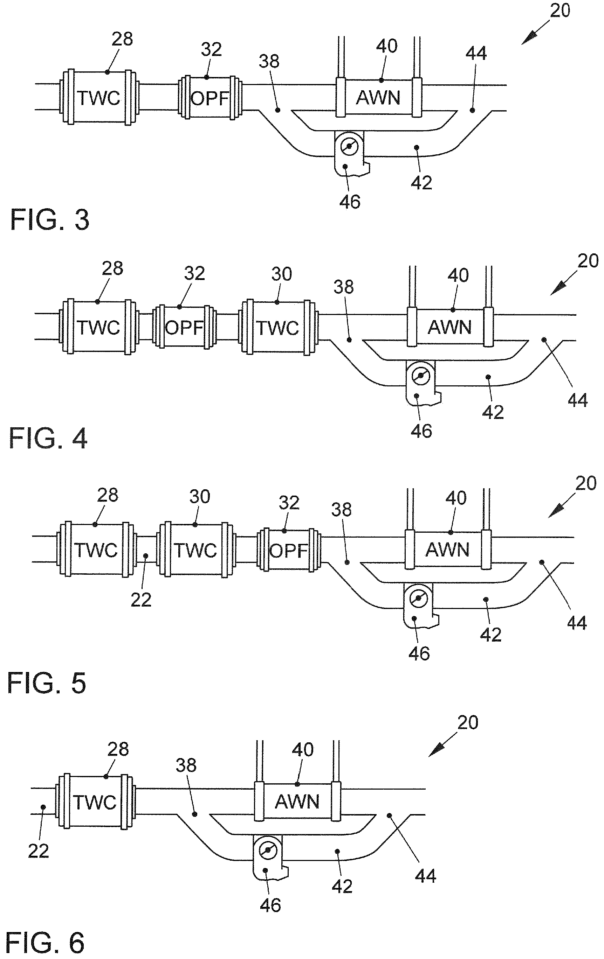

In Figur 3 ist ein weiteres Ausführungsbeispiel für eine Abgasanlage 20 eines erfindungsgemäßen Verbrennungsmotors dargestellt. Bei im Wesentlichen gleichem Aufbau wie zu Figur 2 ausgeführt ist in diesem Ausführungsbeispiel der zweite Drei-Wege-Katalysator 30 durch einen Partikelfilter 32 ersetzt. Alternativ kann auch anstelle eines Partikelfilters 32 ein Vier-Wege-Katalysator verwendet werden, welcher die Funktionalität eines Partikelfilters 32 mit der Funktionalität eines Drei-Wege-Katalysators 30 verbindet, in dem eine katalytisch wirksame Beschichtung auf den Filterkörper des Partikelfilter 32 aufgetragen wird.

In Figur 4 ist ein weiteres Ausführungsbeispiel für eine Abgasanlage 20 eines erfindungsgemäßen Verbrennungsmotors 10 dargestellt. Bei im Wesentlichen gleichem Aufbau wie zu Figur 2 ausgeführt, ist in dieser Ausführungsvariante zusätzlich stromabwärts des ersten Drei-Wege-Katalysators 28 und stromaufwärts des zweiten Drei-Wege-Katalysators 30 ein Partikelfilter 32 angeordnet. Alternativ kann ein solcher Partikelfilter 32 auch, wie in Figur 5 dargestellt, stromabwärts des zweiten Drei-Wege-Katalysators 30 und stromaufwärts der Abgaswärmerückgewinnungseinrichtung 40 angeordnet sein. Dabei ist der vorzugsweise Partikelfilter 32 stromabwärts des zweiten Drei-Wege-Katalysators 30 und stromaufwärts der Verzweigung 38 angeordnet, an welcher der Bypass 42 aus dem Abgaskanal 22 abzweigt.

In Figur 6 ist ein weiteres Ausführungsbeispiel für eine Abgasanlage eines erfindungsgemäßen Verbrennungsmotors 10 dargestellt. Bei im Wesentlichen gleichem Aufbau wie zu Figur 2 ausgeführt, entfällt in diesem Ausführungsbeispiel der zweite Drei-Wege-Katalysator 30.

Alternativ kann in einer vereinfachten Ausführungsform zu den in Figur 2 bis Figur 5 dargestellten Ausführungsbeispielen auch der Bypass 42 für die Abgaswärmerückgewinnungseinrichtung 40 entfallen, sodass diese in jedem Betriebszustand vom Abgas des Verbrennungsmotors 10 durchströmt wird.

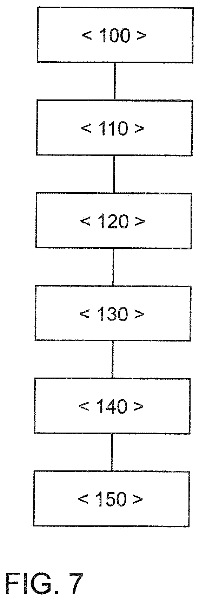

In Figur 7 ist ein Ablaufdiagramm zur Durchführung eines erfindungsgemäßen Verfahrens zum Betreiben eines Verbrennungsmotors 10 dargestellt. Dabei wird in einem ersten Verfahrensschritt <100> der Verbrennungsmotor 10 in einem Normalbetrieb betrieben, bei welchem sämtliche Brennräume 12, 14, 16, 18 mit einem stöchiometrischen Verbrennungsluftverhältnis λ = 1 betrieben werden. In einem Verfahrensschritt <110> wird eine Abgastemperatur T_{EG} oder eine Bauteiltemperatur einer Abgasnachbehandlungskomponente 28, 30, 32 in der Abgasanlage 20 ermittelt. In einem Verfahrensschritt <120> wird die derart ermittelte Abgastemperatur T_{EG} oder Bauteiltemperatur mit einer Schwellentemperatur Ts verglichen. Liegt die Abgastemperatur T_{EG} oder die Bauteiltemperatur unterhalb dieser Schwellentemperatur T_{S}, wird der Verbrennungsmotor 10 in einem Verfahrensschritt <130> mit einem Lambda-Split-Verfahren betrieben, bei dem eine erste Gruppe von Brennräumen 12, 14 des Verbrennungsmotors 10 mit einem unterstöchiometrischen Verbrennungsluftverhältnis λ < 1 und eine zweite Gruppe von Brennräumen 16, 18 mit einem überstöchiometrischen Verbrennungsluftverhältnis λ > 1 betrieben werden. Dabei werden die unverbrannten Kraftstoffkomponenten an der katalytisch wirksamen Oberfläche des Drei-Wege-Katalysators 28 exotherm mit dem Restsauerstoff umgesetzt, wodurch der Drei-Wege-Katalysator 28 und der Abgasstrom stromabwärts des Drei-Wege-Katalysators 28 aufgeheizt werden. In einem Verfahrensschritt <140> wird durch die Abgaswärmerückgewinnungseinrichtung 40 ein Teil dieser thermischen Energie dem Abgasstrom entzogen und in elektrische Energie oder mechanische Energie umgewandelt. In einem Verfahrensschritt <150> wird der Verbrennungsmotor 10 dann bei Überschreiten einer zweiten Schwellentemperatur T_{S2} wieder im Normalbetrieb betrieben. Dabei kann bei entsprechend hoher Last und hohen Abgastemperaturen der Abgasstrom weiterhin durch die Abgaswärmerückgewinnungseinrichtung 40 geleitet werden, um auch in diesem Betriebszustand einen Teil der Wärme dem Abgas zu entziehen und in mechanische oder elektrische Energie zu wandeln.

### Bezugszeichenliste

- 10: Verbrennungsmotor
- 12: erster Brennraum
- 14: zweiter Brennraum
- 16: dritter Brennraum
- 18: vierter Brennraum
- 19: Auslass

- 20: Abgasnachbehandlungssystem
- 22: Abgaskanal
- 24: Abgasturbolader
- 26: Turbine
- 28: erster Drei-Wege-Katalysator

- 30: zweiter Drei-Wege-Katalysator
- 32: Partikelfilter
- 34: erste Lambdasonde / Breitbandsonde
- 36: zweite Lambdasonde / Sprungsonde
- 38: Verzweigung

- 40: Abgaswärmerückgewinnungseinrichtung
- 42: Bypass
- 44: Einmündung
- 46: Abgasklappe
- 48: Temperatursensor

- 50: Motorsteuergerät

## Patentansprüche

1. Verfahren zum Betreiben eines Verbrennungsmotors (10) mit mindestens zwei Brennräumen (12, 14, 16, 18), dessen Auslass (19) mit einer Abgasanlage (20) verbunden ist, wobei die Abgasanlage (20) einen Abgaskanal (22) umfasst, in welchem in Strömungsrichtung eines Abgases des Verbrennungsmotors (10) durch den Abgaskanal (22) ein Drei-Wege-Katalysator (28) und stromabwärts des Drei-Wege-Katalysators (28) eine Abgaswärmerückgewinnungseinrichtung (40) angeordnet sind, wobei
der Verbrennungsmotor (10) mit einem Gaskraftstoff betrieben wird, der ausgewählt ist aus der Gruppe bestehend aus verdichtetem Erdgas (CNG), verflüssigtem Erdgas (LNG) und Biogas,
ein erster Brennraum (12, 14, 16, 18) des Verbrennungsmotors (10) oder eine Gruppe von ersten Brennräumen (12, 14, 16, 18) mit einem unterstöchiometrischen Verbrennungsluftverhältnis (λ < 1) und ein zweiter Brennraum (12, 14, 16, 18) oder eine zweite Gruppe von Brennräumen (12, 14, 16, 18) mit einem überstöchiometrischen Verbrennungsluftverhältnis (λ > 1) betrieben werden, wobei sich stromabwärts des Auslasses (19) des Verbrennungsmotors (10) ein stöchiometrisches Abgas einstellt, wobei die unverbrannten Kraftstoffkomponenten aus dem ersten Brennraum (12, 14, 16, 18) des Verbrennungsmotors (10) mit dem Restsauerstoff aus dem zweiten Brennraum (12, 14, 16, 18) auf dem Drei-Wege-Katalysator (28) exotherm umgesetzt werden, wobei die Abgastemperatur (T_{EG}) angehoben wird, um aus dem Abgas eine Teilmenge der Abgasenthalpie stromabwärts des Drei-Wege-Katalysators (28) durch die Abgaswärmerückgewinnungseinrichtung (40) zurückzugewinnen, und
eine Abgastemperatur (T_{EG}) ermittelt wird und das Verfahren eingeleitet wird, wenn die Abgastemperatur (T_{EG}) unterhalb einer Schwellentemperatur (T_{S}) liegt, wobei der Abgasstrom des Verbrennungsmotors (10) zur Überbrückung der Abgaswärmerückgewinnungseinrichtung (40) durch einen Bypass (42) an der Abgaswärmerückgewinnungseinrichtung (40) vorbeigeleitet wird, wenn der Motorbetriebspunkt die maximale Leistungsaufnahme der Abgaswärmerückgewinnungseinrichtung (40) dauerhaft überschreitet, wobei die Abgaswärmerückgewinnung nach einem Clausius-Rankine-Prozess durchgeführt wird.

2. Verfahren nach Anspruch 1, **dadurch gekennzeichnet, dass** die über die Abgasrückgewinnungseinrichtung (40) zurückgewonnene Energie in mechanische Energie konvertiert wird.

3. Verfahren nach einem der Ansprüche 1 oder 2, **dadurch gekennzeichnet, dass** die über die Abgasrückgewinnungseinrichtung (40) zurückgewonnene Energie in elektrische Energie konvertiert wird.

4. Verbrennungsmotor (10) mit mindestens einem ersten Brennraum (12, 14, 16, 18) und mindestens einem zweiten Brennraum (12, 14, 16, 18), wobei ein Auslass (19) des Verbrennungsmotors (10) mit einer Abgasanlage (20) verbunden ist, wobei die Abgasanlage (20) einen Abgaskanal (22) aufweist, in welchem in Strömungsrichtung eines Abgases des Verbrennungsmotors (10) durch den Abgaskanal (22) mindestens ein Drei-Wege-Katalysator (28, 30) und stromabwärts des Drei-Wege-Katalysators (28, 30) eine Abgaswärmerückgewinnungseinrichtung (40) angeordnet sind, sowie mit einem Motorsteuergerät (50) welches dazu eingerichtet ist, ein Verfahren nach einem der Ansprüche 1 bis 3 auszuführen, wenn ein maschinenlesbarer Programmcode durch das Motorsteuergerät (50) ausgeführt wird, wobei ein Bypass (42) zur Überbrückung der Abgaswärmerückgewinnungseinrichtung (40) vorgesehen ist, mit welchem das Abgas des Verbrennungsmotors (10) an der Abgaswärmerückgewinnungseinrichtung (40) vorbeigeleitet werden kann.

5. Verbrennungsmotor (10) nach Anspruch 4, **dadurch gekennzeichnet, dass** stromabwärts des Drei-Wege-Katalysators (28, 30) und stromaufwärts der Abgaswärmerückgewinnungseinrichtung (40) ein Partikelfilter (32) angeordnet ist.

6. Verbrennungsmotor (10) nach Anspruch 4 oder 5, **dadurch gekennzeichnet, dass** in dem Bypass (42) eine Abgasklappe (46) angeordnet ist.

7. Verbrennungsmotor (10) nach einem der Ansprüche 4 bis 6, **dadurch gekennzeichnet, dass** stromabwärts des Drei-Wege-Katalysators (28) und stromaufwärts der Abgaswärmerückgewinnungseinrichtung (40) ein zweiter Drei-Wege-Katalysator (30) angeordnet ist.

8. Verbrennungsmotor (10) nach Anspruch 4 und Anspruch 7, **dadurch gekennzeichnet, dass** der Bypass (42) stromabwärts des zweiten Drei-Wege-Katalysators (30) an einer Verzweigung (38) aus dem Abgaskanal (22) abzweigt und stromabwärts der Abgaswärmerückgewinnungseinrichtung (40) an einer Einmündung (44) wieder in den Abgaskanal (22) mündet.

9. Verbrennungsmotor (10) nach einem der Ansprüche 4 bis 8, **dadurch gekennzeichnet, dass** der Verbrennungsmotor (10) als ein mittels eines Abgasturboladers (24) aufgeladener und mit einem Gas betriebener Verbrennungsmotor (10) ist.

## Claims

1. Method for operating an internal combustion engine (10) having at least two combustion chambers (12, 14, 16, 18), the outlet (19) of which is connected to an exhaust system (20), wherein the exhaust system (20) comprises an exhaust channel (22), in which - in flow direction of an exhaust gas from the internal combustion engine (10) through the exhaust channel (22) - a three-way catalytic converter (28) and downstream of the three-way catalytic converter (28) an exhaust gas heat recovery device (40) are arranged, wherein
the internal combustion engine (10) is operated with a gaseous fuel selected from the group consisting of compressed natural gas (CNG), liquefied natural gas (LNG) and biogas,
a first combustion chamber (12, 14, 16, 18) of the internal combustion engine (10) or a group of first combustion chambers (12, 14, 16, 18) are operated with a sub-stoichiometric air-fuel ratio (λ < 1) and a second combustion chamber (12, 14, 16, 18) or a second group of combustion chambers (12, 14, 16, 18) are operated with a super-stoichiometric air-fuel ratio (λ > 1), wherein a stoichiometric exhaust gas establishes downstream of the outlet (19) of the internal combustion engine (10), wherein the unburned fuel components from the first combustion chamber (12, 14, 16, 18) of the internal combustion engine (10) are converted exothermically on the three-way catalytic converter (28) with the residual oxygen from the second combustion chamber (12, 14, 16, 18), wherein the exhaust gas temperature (T_{EG}) is raised in order to recover, from the exhaust gas, a portion of the exhaust gas enthalpy downstream of the three-way catalytic converter (28) through the exhaust gas heat recovery device (40), and
an exhaust gas temperature (T_{EG}) is ascertained and the method is initiated when the exhaust gas temperature (T_{EG}) is below a threshold temperature (Ts), wherein the exhaust gas flow of the internal combustion engine (10) is routed past the exhaust gas heat recovery device (40) by a bypass (42) to bypass the exhaust gas heat recovery device (40) if the engine operating point continuously exceeds the maximum power input of the exhaust gas heat recovery device (40), wherein the exhaust gas heat recovery is carried out according to a Clausius-Rankine process.

2. Method according to claim 1, **characterized in that** the energy recovered via the exhaust gas recovery device (40) is converted into mechanical energy.

3. Method according to either of claims 1 or 2, **characterized in that** the energy recovered via the exhaust gas recovery device (40) is converted into electrical energy.

4. Internal combustion engine (10) having at least one first combustion chamber (12, 14, 16, 18) and at least one second combustion chamber (12, 14, 16, 18), wherein an outlet (19) of the internal combustion engine (10) is connected to an exhaust system (20), wherein the exhaust system (20) has an exhaust channel (22), in which - in flow direction of an exhaust gas from the internal combustion engine (10) through the exhaust channel (22) - at least one three-way catalytic converter (28, 30) and downstream of the three-way catalytic converter (28, 30) an exhaust gas heat recovery device (40) are arranged, and the exhaust gas system has an engine control unit (50) which is configured to carry out a method according to any of claims 1 to 3 when a machine-readable program code is executed by the engine control unit (50), wherein a bypass (42) is provided to bypass the exhaust gas heat recovery device (40), with which bypass the exhaust gas of the internal combustion engine (10) can be routed past the exhaust gas heat recovery device (40).

5. Internal combustion engine (10) according to claim 4,
**characterized in that** a particulate filter (32) is arranged downstream of the three-way catalytic converter (28, 30) and upstream of the exhaust gas heat recovery device (40).

6. Internal combustion engine (10) according to claim 4 or 5,
**characterized in that** an exhaust gas flap (46) is arranged in the bypass (42).

7. Internal combustion engine (10) according to any of claims 4 to 6,
**characterized in that** a second three-way catalytic converter (30) is arranged downstream of the three-way catalytic converter (28) and upstream of the exhaust gas heat recovery device (40).

8. Internal combustion engine (10) according to claim 4 and claim 7,
**characterized in that** the bypass (42) branches off from the exhaust gas channel (22) downstream of the second three-way catalytic converter (30) at a junction (38) and rejoins the exhaust gas channel (22) downstream of the exhaust gas heat recovery device (40) at an inlet (44).

9. Internal combustion engine (10) according to any of claims 4 to 8,
**characterized in that** the internal combustion engine (10) is an internal combustion engine (10) charged by means of an exhaust gas turbocharger (24) and operated with a gas.

## Revendications

1. Procédé de fonctionnement d'un moteur à combustion interne (10) comportant au moins deux chambres de combustion (12, 14, 16, 18), dont la sortie (19) est reliée à une installation de gaz d'échappement (20), dans lequel l'installation de gaz d'échappement (20) comprend un canal de gaz d'échappement (22) dans lequel sont agencés, dans le sens d'écoulement d'un gaz d'échappement du moteur à combustion interne (10) à travers le canal de gaz d'échappement (22), un catalyseur à trois voies (28) et, en aval du catalyseur à trois voies (28), un équipement de récupération de chaleur de gaz d'échappement (40), dans lequel
le moteur à combustion interne (10) est amené à fonctionner avec un combustible gazeux, qui est choisi parmi le groupe constitué de gaz naturel comprimé (GNC), gaz naturel liquéfié (GNL) et biogaz,
une première chambre de combustion (12, 14, 16, 18) du moteur à combustion interne (10) ou un groupe de premières chambres de combustion (12, 14, 16, 18) est amené(e) à fonctionner avec un rapport d'air de combustion sous-stœchiométrique (λ < 1) et une seconde chambre de combustion (12, 14, 16, 18) ou un second groupe de chambres de combustion (12, 14, 16, 18) est amené(e) à fonctionner avec un rapport d'air de combustion sur-stœchiométrique (λ > 1), dans lequel en aval de la sortie (19) du moteur à combustion interne (10) un gaz d'échappement stœchiométrique est obtenu, dans lequel les composants de combustible non brûlés provenant de la première chambre de combustion (12, 14, 16, 18) du moteur à combustion interne (10) sont mis en réaction exothermique avec l'oxygène résiduel provenant de la seconde chambre de combustion (12, 14, 16, 18) sur le catalyseur à trois voies (28), dans lequel la température de gaz d'échappement (T_{EG}) est augmentée afin de récupérer, à partir du gaz d'échappement, une quantité partielle de l'enthalpie de gaz d'échappement en aval du catalyseur à trois voies (28) à travers l'équipement de récupération de chaleur de gaz d'échappement (40), et
une température de gaz d'échappement (T_{EG}) est déterminée et le procédé est lancé lorsque la température de gaz d'échappement (T_{EG}) est inférieure à une température seuil (T_{S}), dans lequel le flux de gaz d'échappement du moteur à combustion interne (10) est dévié à travers une dérivation (42) au niveau de l'équipement de récupération de chaleur de gaz d'échappement (40) pour contourner l'équipement de récupération de chaleur de gaz d'échappement (40) lorsque le point de fonctionnement de moteur dépasse de manière durable la puissance absorbée maximale de l'équipement de récupération de chaleur de gaz d'échappement (40), dans lequel la récupération de chaleur de gaz d'échappement est réalisée selon un processus de Clausius-Rankine.

2. Procédé selon la revendication 1, **caractérisé en ce que** l'énergie récupérée par l'équipement de récupération de gaz d'échappement (40) est convertie en énergie mécanique.

3. Procédé selon l'une des revendications 1 ou 2, **caractérisé en ce que** l'énergie récupérée par le dispositif de récupération de gaz d'échappement (40) est convertie en énergie électrique.

4. Moteur à combustion interne (10) comportant au moins une première chambre de combustion (12, 14, 16, 18) et au moins une seconde chambre de combustion (12, 14, 16, 18), dans lequel une sortie (19) du moteur à combustion interne (10) est reliée à une installation de gaz d'échappement (20), dans lequel l'installation de gaz d'échappement (20) présente un canal de gaz d'échappement (22) dans lequel sont agencés, dans le sens d'écoulement d'un gaz d'échappement du moteur à combustion interne (10) à travers le canal de gaz d'échappement (22), au moins un catalyseur à trois voies (28, 30) et, en aval du catalyseur à trois voies (28, 30), un équipement de récupération de chaleur de gaz d'échappement (40), et comportant un appareil de commande de moteur (50) qui est conçu pour exécuter un procédé selon l'une des revendications 1 à 3 lorsqu'un code de programme lisible par machine est exécuté par l'appareil de commande de moteur (50), dans lequel une dérivation (42) est prévue pour contourner l'équipement de récupération de chaleur de gaz d'échappement (40), grâce à laquelle le gaz d'échappement du moteur à combustion interne (10) peut être dévié au niveau de l'équipement de récupération de chaleur de gaz d'échappement (40).

5. Moteur à combustion interne (10) selon la revendication 4,
**caractérisé en ce qu'**un filtre à particules (32) est agencé en aval du catalyseur à trois voies (28, 30) et en amont de l'équipement de récupération de chaleur de gaz d'échappement (40).

6. Moteur à combustion interne (10) selon la revendication 4 ou 5,
**caractérisé en ce qu'**un clapet de gaz d'échappement (46) est agencé dans la dérivation (42).

7. Moteur à combustion interne (10) selon l'une des revendications 4 à 6,
**caractérisé en ce qu'**un second catalyseur à trois voies (30) est agencé en aval du catalyseur à trois voies (28) et en amont de l'équipement de récupération de chaleur de gaz d'échappement (40).

8. Moteur à combustion interne (10) selon la revendication 4 et la revendication 7, **caractérisé en ce que** la dérivation (42) bifurque en aval du second catalyseur à trois voies (30), au niveau d'une bifurcation (38) du canal de gaz d'échappement (22) et débouche à nouveau dans le canal de gaz d'échappement (22) en aval de l'équipement de récupération de chaleur de gaz d'échappement (40), au niveau d'une embouchure (44).

9. Moteur à combustion interne (10) selon l'une des revendications 4 à 8, **caractérisé en ce que** le moteur à combustion interne (10) est un moteur à combustion interne (10) suralimenté par le biais d'un turbocompresseur à gaz d'échappement (24) et entraîné en fonctionnement par un gaz.
